# EUROPÄISCHE PATENTANMELDUNG

(11) **EP 1 950 426 A2**
(43) Veröffentlichungstag der Anmeldung: **30.07.2008**
(21) Anmeldenummer: 08001089.5
(22) Anmeldetag: 22.01.2008
(51) Int. Cl.: F15B 15/14, F16F 9/06

(54) **Hydromechanisches Abstützelement, insbesondere Federbein**

(30) Priorität: 26.01.2007 DE 102007003968
(71) Anmelder: Hydrosaar GmbH, 66540 Neunkirchen-Heinitz (DE)
(72) Erfinder: Alles, Roman, 66763 Dillingen (DE); Pfeiffer, Marcus, Karl, 66907 Glan-Münchweiler (DE)
(74) Vertreter: Bartels & Partner

(57) **Zusammenfassung**

Ein hydromechanisches Abstützelement, insbesondere Federbein, mit einem Gehäuseteil (1) und einem Kolben (3), der Kolbenflächen (7, 8) aufweist, die im Gehäuseteil (1) zwei Druckräume (10, 11) für Druckmedien voneinander trennen, durch die an den angrenzenden Kolbenflächen (7, 8) in zueinander entgegengesetzte Axialrichtungen wirksame Kräfte an dem im Gehäuseteil (1) axial bewegbar geführten Kolben (3) erzeugbar sind, ist dadurch gekennzeichnet, dass zur Realisierung eines Art Baukastensystems das Innere des Kolbens (3) mindestens zwei Hohlräume (15, 17) aufweist, die, durch eine Trennwand (12) voneinander zumindest teilweise separiert, derart ausgebildet sind, dass sie der Aufnahme von Gleichbauteilen dienen, wie Dämpferkolben (19), Deckelteilen (27) oder vergleichbaren Komponenten.

## Beschreibung

Die Erfindung betrifft ein hydromechanisches Abstützelement, insbesondere Federbein, mit einem Gehäuseteil und einem Kolben, der Kolbenflächen aufweist, die im Gehäuseteil zwei Druckräume für Druckmedien voneinander trennen, durch die an den angrenzenden Kolbenflächen in zueinander entgegengesetzte Axialrichtungen wirksame Kräfte an dem im Gehäuseteil axial bewegbar geführten Kolben erzeugbar sind.

Prinzipiell gesehen sind derartige Abstützelemente Kolbenzylindereinheiten in Gestalt eines doppelt wirkenden Druckmittelzylinders. Derartige Kolbenzylindereinheiten finden in der Technik verbreitete Anwendung, nicht nur zur Erzeugung von Abstützkräften, sondern auch für die Erzeugung von Betätigungskräften, etwa Lenkkräften für Fahrzeuge, siehe DE 295 12 061 U1.

Bevorzugt kommen derartige Abstützelemente als Federbein bei Landfahrzeugen oder Luftfahrzeugen zum Einsatz. Hierfür sind Federbeine in unterschiedlichen Auslegungen, was Baugröße und Stützlastbereich anbelangt, im Handel erhältlich. Entsprechend diesem ausgedehnten Einsatzbereich ist ein Bedarf an unterschiedlich ausgelegten Federbeinen in verhältnismäßig hohen Stückzahlen gegeben. Die Höhe der anfallenden Fertigungskosten ist hier demzufolge wirtschaftlich äußerst bedeutsam.

Im Hinblick hierauf liegt der Erfindung die Aufgabe zugrunde, ein hydromechanisches Abstützelement, insbesondere Federbein, zur Verfügung zu stellen, dessen Bauweise eine besonders rationelle und wirtschaftliche Fertigung, auch in unterschiedlichen Auslegungen, ermöglicht.

Erfindungsgemäß ist diese Aufgabe durch ein Abstützelement gelöst, das die Merkmale des Patentanspruches 1 in seiner Gesamtheit aufweist.

Danach besteht die wesentliche Besonderheit der Erfindung darin, dass der Kolben mit inneren Hohlräumen versehen ist, die für die Aufnahme von Gleichbauteilen vorgesehen sind und dadurch die Möglichkeit eröffnen, eine Art Baukastensystem zu realisieren, indem, je nach gewünschter Auslegungsform, ausgewählte Gleichbauteile in einem ausgewählten Hohlraum in ihre Funktionsstellung eingebaut werden können. Hierbei kann es sich bei den Bestandteile des Baukastensystems bildenden Gleichbauteilen um das Betriebsverhalten für die jeweilige Auslegungsform des Abstützelementes bestimmende Funktionsteile handeln, beispielsweise Dämpferkolben für im Abstützelement integrierte hydropneumatische Kolbenspeicher sowie Deckelteile zum Verschluss eines jeweils vorgesehenen Speicherraumes. Die Möglichkeit, unterschiedliche Auslegungsvarianten aus einer Art Baukastensystem zu gestalten, bietet beste Voraussetzungen für eine besonders rationelle Fertigung von Abstützelementen, insbesondere Federbeinen.

Bei vorteilhaften Ausführungsbeispielen ist im Kolben zur Bildung der Hohlräume ein koaxialer Innenzylinder vorgesehen, der durch die in einer Radialebene verlaufende Trennwand in zwei die beiden Hohlräume bildende Teilzylinder unterteilt ist. Eine derartige Bauweise mit einem koaxialen Innenzylinder, der lediglich mittels innerer Trennwand unterteilt ist, eröffnet auch die vorteilhafte Möglichkeit, den Kolben seinerseits als ein zum Baukastensystem gehörendes Gleichbauteil für unterschiedliche Auslegungsvarianten auszubilden, was wiederum die zusätzliche Möglichkeit eröffnet, auch das Gehäuseteil als Gleichbauteil und Bestandteil des Baukastensystems für Auslegungsformen auszubilden, die sich lediglich durch unterschiedlichen Einbau der entsprechenden Gleichbauteile in den Hohlräumen des Kolbens unterscheiden, während dieser selbst, was zumindest seine äußere Gestalt betrifft, ein Gleichbauteil darstellt.

Vorzugsweise ist die Anordnung so getroffen, dass ein am Kolben radial vorstehender Ringkörper, der die an beide Druckräume angrenzenden Kolbenflächen aufweist, ein Bestandteil der Führung des Kolbens im Gehäuseteil bildet.

Dieser Ringkörper befindet sich vorzugsweise auf halber Länge des Kolbens, so dass innerhalb des Gehäuseteiles sowohl für die hingehende als auch die hergehende Axialbewegung eine größtmögliche Wegstrecke als Federweg zur Verfügung steht.

Vorzugsweise befindet sich auch die Trennwand auf halber Länge des Kolbens, so dass sich für beide angrenzenden inneren Teilzylinder gleiche Volumina ergeben.

Bei besonders bevorzugten Ausführungsbeispielen ist in zumindest einem Teilzylinder ein Dämpferkolben eines hydropneumatischen Kolbenspeichers axial bewegbar geführt, und ein das Ende des jeweiligen Teilzylinders verschließendes Deckelteil ist als weiteres Gleichbauteil dazu vorgesehen, um zwischen sich und dem Dämpferkolben die Gasseite des gebildeten Kolbenspeichers einzuschließen.

Beide dieser Gleichbauteile, also Dämpferkolben und Deckelteil, können bei besonders bevorzugten Ausführungsbeispielen, bei denen in beiden Teilzylindern ein hydropneumatischer Kolbenspeicher gebildet ist, in den jeweiligen Teilzylinder eingebaut sein.

Wie erwähnt, kann die die Funktionsweise bestimmende Auslegung innerhalb des Baukastensystems unterschiedlich sein. So kann die zwischen Dämpferkolben und Trennwand befindliche Ölseite jedes Kolbenspeichers mit dem gleichen Druckraum in Verbindung sein. Dies bedingt lediglich die Ausbildung einer Durchgangsbohrung in der Trennwand, zusätzlich zu der im Kolben vorhandenen Fluidverbindung einer Ölseite mit dem zugeordneten Druckraum.

Alternativ können die Ölseiten der Kolbenspeicher mit unterschiedlichen Druckräumen in Verbindung sein. In beiden Fällen erfolgt die Verbindung zwischen jeweiligem Druckraum und Ölseite des jeweils betreffenden Kolbenspeichers über vom jeweiligen Teilzylinder zum Kolbenumfang verlaufende Bohrungen, die im Bereich einer Kolbenfläche am Ringkörper münden.

Nachstehend ist die Erfindung anhand von in der Zeichnung dargestellten Ausführungsbeispielen im Einzelnen erläutert. Es zeigen:
- Fig. 1 einen stark vereinfacht dargestellten Längsschnitt lediglich des Gehäuseteiles mit darin befindlichem Kolben eines Federbeines gemäß einem ersten Ausführungsbeispiel der Erfindung, dargestellt ohne angeschlossene Bestandteile eines zugehörigen Hydrauliksystems, und
- Fig. 2 bis 5 der Fig. 1 entsprechende Darstellungen von vier weiteren, abgewandelten Ausführungsbeispielen.

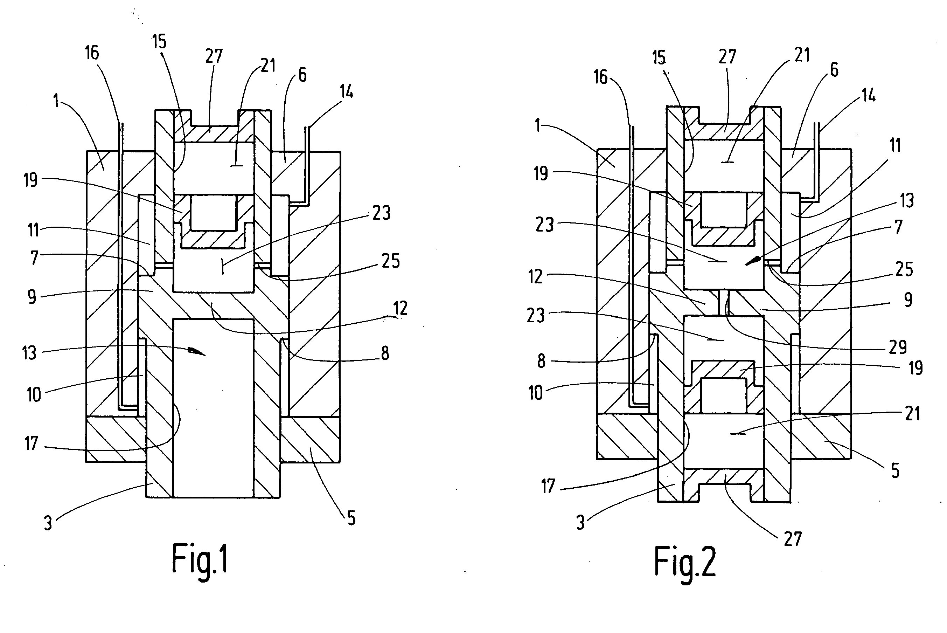

In einem mit 1 bezeichneten Gehäuseteil, das bei den Ausführungsbeispielen sämtlicher Fig. 1 bis 5 völlig gleich ausgebildet ist, ist ein Kolben 3 axial bewegbar geführt, wobei im Falle der Benutzung als Federbein das eine dieser Bauteile 1 und 3 der Bodenseite und das jeweils andere der Bauteile 1 und 3 der Gestängeseite zugeordnet ist. Der Kolben 3 ist für seine Axialbewegungen relativ zum Gehäuseteil 1 an drei Lagerstellen geführt, nämlich, in den Fig. von unten nach oben, an einem Gehäuseabschlussdeckel 5, am Außenumfang eines am Umfang des Kolbens 3 radial vorstehenden Ringkörpers 9 sowie am oberen Endabschnitt 6 des Gehäuseteiles 1. Der Ringkörper 9 dient als Trennelement zwischen beidseits an ihn angrenzende Druckräume 10 und 11. Von diesen ist der Druckraum 10 axial durch den Gehäuseabschlussdeckel 5 begrenzt, während beim Druckraum 11 der in den Fig. oben gelegene Endabschnitt 6 des Gehäuseteiles 1 den axialen Abschluss bildet. Der Druckraum 10 ist über eine Druckleitung 16 und der Druckraum 11 über eine Druckleitung 14 mit dem zugehörigen Hydrauliksystem verbunden. Beide innerhalb des Gehäuseteiles 1 verlaufenden Druckleitungen 16 und 14 münden an der Oberseite des oberen Endabschnittes 6 des Gehäuseteiles 1.

Wie aus den Fig. ersichtlich, ist der Außendurchmesser des Kolbens 3 auf beiden Seiten des Ringkörpers 9 unterschiedlich groß. Somit bilden die den Ringkörper 9 axial begrenzenden Wandteile Ringflächen 7 und 8 unterschiedlicher Größe, wobei die an den Druckraum 11 angrenzende Ringfläche 8 eine größere wirksame Kolbenfläche des Kolbens 3 bildet als die andere Ringfläche 8, die am Druckraum 10 die wirksame Kolbenfläche definiert, so dass die für den Betrieb erforderlichen Federwirkflächen gebildet sind. Bei einer derartigen Kolbenbauart lassen sich in vorteilhafter Weise auch bei großen Federbeindurchmessern kleine Federwirkflächen individuell mit geringem Aufwand realisieren, indem für das gegenseitige Abstimmen der Ringflächengrößen an den Druckräumen 11 und 10 entsprechende Außendurchmesser des Kolbens 3 vorgesehen sind.

Der Kolben 3 weist bei sämtlichen gezeigten Ausführungsbeispielen einen koaxialen Innenzylinder 13 auf, der durch eine auf halber Länge des Kolbens 3 gelegene Trennwand 12, die sich in einer Radialebene erstreckt, in zwei Teilzylinder 15 und 17 unterteilt ist. Mittels Bestandteile eines Baukastensystems bildenden Gleichbauteilen, die in einen oder beide Teilzylinder 15, 17 einbaubar sind, lassen sich nach Wunsch unterschiedliche Auslegungsvarianten hinsichtlich des Betriebsverhaltens realisieren. Beispielsweise zeigt Fig. 1 ein Ausführungsbeispiel, bei dem als Dämpferanordnung ein hydropneumatischer Kolbenspeicher benutzt wird, der dadurch gebildet ist, dass in den Teilzylinder 15 ein axial verschiebbar geführter, topfartig ausgebildeter Dämpferkolben 19 eingebaut ist, der eine Gasseite 21 von einer Ölseite 23 separiert. Ein Gas-Füllanschluß für die Gasseite 21 ist nicht dargestellt. Die Ölseite 23 ist über Querbohrungen 25 mit dem Druckraum 11 in Verbindung, wobei diese Querbohrungen 25 in der Nähe der den Druckraum 11 begrenzenden Ringfläche 7 am Ringkörper 9 münden. Der äußere Abschluß der Gasseite 21 ist durch ein in das offene Ende des Teilzylinders 15 eingesetztes Deckelteil 27 gebildet. Durch geeignete Auslegung des so im Teilzylinder 15 gebildeten Kolbenspeichers hinsichtlich Volumen und Druck auf der Gasseite 21 sowie der Geometrie der Ölseite 23, einschließlich Dimensionierung der Querbohrungen 25 für eine gegebenenfalls gewünschte Drosselwirkung, ist die für den Betrieb erwünschte Feder/Dämpfer-Kennlinie realisierbar.

Fig. 2 verdeutlicht eine Auslegungsvariante, bei der in beiden Teilzylindern 15 und 17 eine Dämpferanordnung in Form je eines hydropneumatischen Kolbenspeichers benutzt wird, wobei diese Auslegungsform durch Gleichbauteile realisiert ist, nämlich dadurch, dass jeweils identische Dämpferkolben 19 und Deckelteile 27, wie sie beim Beispiel von Fig. 1 benutzt sind, als Gleichbauteile Verwendung finden. Bei diesem Ausführungsbeispiel sind die Ölseiten 23 jedes Kolbenspeichers mit dem gleichen Druckraum in Fluidverbindung, nämlich mit dem in der Fig. oben liegenden Druckraum 11, wobei die Trennwand 12 mit einer zentralen Durchgangsbohrung 29 versehen ist. Bei diesem Beispiel finden nicht nur die Dämpferkolben 19 und die Deckelteile 27 als Gleichbauteile, die den entsprechenden Bauteilen des Beispiels von Fig. 1 entsprechen, Anwendung, sondern auch der Kolben 3 entspricht in seiner Bauweise dem Kolben 3 von Fig. 1, abgesehen davon, dass in der Trennwand 12 eine Bohrung 29 gebildet ist. Die Gehäuseteile 1 beider Beispiele sind wiederum identisch. Das Beispiel von Fig. 2 ermöglicht eine Anpassung der Arbeitskennlinien beispielsweise für den Erhalt einer progressiven Federung.

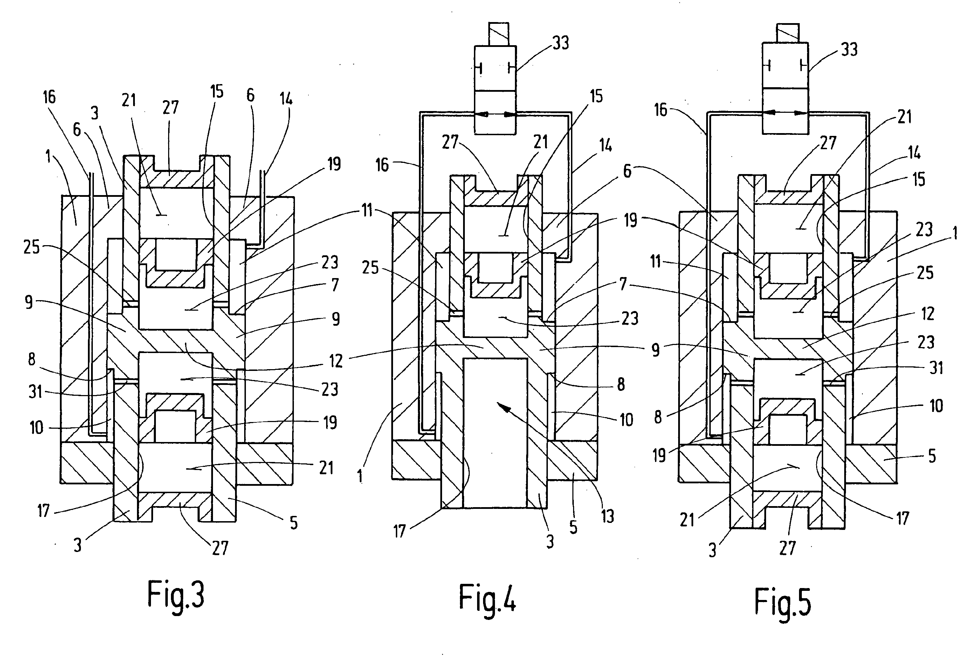

Die Variante von Fig. 3 unterscheidet sich von dem Beispiel von Fig. 2 lediglich insofern, als die Ölseiten 23 beider Kolbenspeicher nicht untereinander verbunden sind, sondern mit verschiedenen Druckräumen in Verbindung sind. So ist die Ölseite 23 des oben liegenden Kolbenspeichers über die Querbohrungen 25 mit dem Druckraum 11 verbunden (siehe entsprechende Anordnung bei Fig. 1 und 2), während die Ölseite 23 des anderen Kolbenspeichers über Querbohrungen 31 mit dem Druckraum 10 in Verbindung ist, wobei diese Querbohrungen 31 ebenfalls in der Nähe der am Ringkörper 9 gebildeten Ringfläche 8 münden. Gegenüber Fig. 2 ist bei dieser Auslegung eine Federdämpfung für Federhübe in beiden Axialrichtungen möglich. Wiederum wird bei dieser Auslegungsform ein Gehäuseteil 1 benutzt, das mit den Gehäuseteilen der übrigen Beispiele identisch ist. Dämpferkolben 19 und Deckelteile 27 sind wiederum Gleichbauteile. Der Kolben 3 unterscheidet sich gegenüber Fig. 3 lediglich durch zusätzlich eingebrachte Querbohrungen 31.

Das Beispiel von Fig. 4 unterscheidet sich von dem Beispiel von Fig. 1 lediglich insofern, als zusätzlich zu den Bestandteilen des jeweiligen Hydrauliksystemes, das bei sämtlichen Ausführungsbeispielen an den Druckleitungen 14 und 16 angeschlossen, jedoch in der Zeichnung nicht dargestellt ist, ein Wegeventil 33 angeschlossen ist, das eine unmittelbare Verbindung der Druckleitungen 14 und 16 ermöglicht, so dass im Betrieb eine Differentialwirkung erreicht werden kann. Gleichzeitig ermöglicht das Wegeventil 33 ein Sperren der Druckleitungen 14 und 16, wodurch sich eine bei bestimmten Betriebszuständen erwünschte Versteifung des Federbeines ergibt.

Fig. 5 verdeutlicht die Nutzung eines entsprechenden Wegeventils 33 bei einem Ausführungsbeispiel, das, wie dies beim Beispiel von Fig. 3 der Fall ist, eine "ringseitige" Druckeinstellung, gesondert für die Kolbenspeicher vorsieht und somit sowohl den Differentialbetrieb als auch eine progressive Federwirkung ermöglicht.

Wie der Vergleich der Fig. 1 bis 5 zeigt, verkörpert die Erfindung ein modulares Konzept, bei dem in der Art eines Baukastensystems verschiedene Ausbaustufen mit Gleichbauteilen verwirklichbar sind. Das erfindungsgemäße hydromechanische Abstützelement ist insbesondere geeignet als Feder- und Dämpferausrüstungsteil von Fahrzeugfahrwerken, insbesondere im Rahmen schwerer Arbeitsmaschinen, wie Erdbewegungsmaschinen und dergleichen mehr. Das Abstützelement kann aber auch ganz allgemein der Dämpfung von Arbeitszylindern dienen, wobei ein Abbremsen der Kolbengeschwindigkeit an einem oder beiden Hubenden hilft, Massenkräfte abzubauen und zu beherrschen. Neben der Realisierung von Endlagendämpfungen läßt sich so auch ein Abbremsen in beliebigen Hublagen erreichen, so dass das Abstützelement auch im Bereich von Werkzeugmaschinen einsetzbar ist. Sofern man die Fluidzu- und -ableitungen mit einschlägigen Ventilsteuerungen versieht, lassen sich hier in einem sehr weiten Rahmen Federungs- und Dämpfungsaufgaben sinnfällig erledigen. Auch besteht die Möglichkeit, in die fluidführenden Verbindungen zur Ölseite des jeweiligen Kolbenspeichers Ventile, wie Drosseln oder Blenden, einzusetzen, um dergestalt die Dämpfungs- und Federungscharakteristik für das Abstützelement zu definieren.

Wie sich insbesondere aus den Fig. 1 bis 5 ergibt, ist der Wandaufbau für den Kolben 3 im wesentlichen symmetrisch verlaufend ausgebildet, insbesondere, wenn man die Längsachse der Anordnung ansieht, bezogen auf die möglichen Verfahrbewegungen für die einsetzbaren Dämpferkolben 19.

Sofern hier der Charakter der Gleichbauteile angesprochen ist, bezogen auf die Deckelteile 27 sowie den jeweiligen Dämpferkolben 19, bezieht sich dies insbesondere auf deren Außendurchmesser, die einander entsprechen und die insbesondere dem Innendurchmesser der jeweiligen Aufnahmekammer des Kolbens 3 entsprechen, wobei dieser durch die Trennwand 12 in zwei Teilräume gleichen Volumens unterteilt ist, die von den Gleichbauteilen nicht immer belegt zu sein brauchen (vgl. Fig. 1 und 3).

Im Rahmen der Fortgestaltung des Baukastenprinzips ist der jeweilige Gehäuseabschlussdeckel 5 als ebene Abschlussplatte ausgebildet und bei allen Varianten im wesentlichen gleich ausgestaltet; ebenso wie das topfartige Gehäuseteil 1, das stirnseitig mit bündigem Randabschluss auf dem Gehäuseabschlussdeckel 5 aufsitzt. Wie die einzelnen Ausführungsformen nach den Fig. belegen, ist es darüber hinaus möglich, bei Bedarf eine bereits bestehende Anordnung umzurüsten, was unmittelbar am Ort der Herstellung geschehen kann, aber auch am Ort der tatsächlichen Verwendung. In jedem Fall können die korrespondierenden Gleichbauteile unmittelbar eingesetzt werden und eine entsprechende Nacharbeitung ist nur im Umfang der vorzusehenden Fluidanschlussstellen entsprechend notwendig.

## Patentansprüche

1. Hydromechanisches Abstützelement, insbesondere Federbein, mit einem Gehäuseteil (1) und einem Kolben (3), der Kolbenflächen (7, 8) aufweist, die im Gehäuseteil (1) zwei Druckräume (10, 11) für Druckmedien voneinander trennen, durch die an den angrenzenden Kolbenflächen (7, 8) in zueinander entgegengesetzte Axialrichtungen wirksame Kräfte an dem im Gehäuseteil (1) axial bewegbar geführten Kolben (3) erzeugbar sind, **dadurch gekennzeichnet, dass** zur Realisierung eines Art Baukastensystems das Innere des Kolbens (3) mindestens zwei Hohlräume (15, 17) aufweist, die, durch eine Trennwand (12) voneinander zumindest teilweise separiert, derart ausgebildet sind, dass sie der Aufnahme von Gleichbauteilen dienen, wie Dämpferkolben (19), Deckelteilen (27) oder vergleichbaren Komponenten.

2. Hydromechanisches Abstützelement nach Anspruch 1, **dadurch gekennzeichnet, dass** im Kolben (3) zur Bildung der Hohlräume (15, 17) ein koaxialer Innenzylinder (13) vorgesehen ist, der durch die in einer Radialebene verlaufende Trennwand (12) in zwei die beiden Hohlräume bildende Teilzylinder (15, 17) unterteilt ist.

3. Hydromechanisches Abstützelement nach Anspruch 1 oder 2, **dadurch gekennzeichnet, dass** ein am Kolben (3) radial vorstehender Ringkörper (9), der die an beide Druckräume (10, 11) angrenzenden Kolbenflächen (7, 8) aufweist, ein Bestandteil der Führung des Kolbens (3) im Gehäuseteil (1) bildet.

4. Hydromechanisches Abstützelement nach Anspruch 3, **dadurch gekennzeichnet, dass** sich der radial vorstehende Ringkörper (9) auf halber Länge des Kolbens (3) befindet.

5. Hydromechanisches Abstützelement nach einem der Ansprüche 1 bis 4, **dadurch gekennzeichnet, dass** sich die Trennwand (12) auf halber Länge des Kolbens (3) befindet.

6. Hydromechanisches Abstützelement nach einem der Ansprüche 2 bis 5, **dadurch gekennzeichnet, dass** in zumindest einem Teilzylinder (15) ein Dämpferkolben (19) eines hydropneumatischen Kolbenspeichers axial bewegbar geführt ist.

7. Hydromechanisches Abstützelement nach Anspruch 6, **dadurch gekennzeichnet, dass** ein das Ende des jeweiligen Teilzylinders (15, 17) verschließendes, zwischen sich und dem Dämpferkolben (19) die Gasseite (21) des Kolbenspeichers einschließendes Deckelteil (27) vorgesehen ist.

8. Hydromechanisches Abstützelement nach Anspruch 6 oder 7, **dadurch gekennzeichnet, dass** in beiden Teilzylindern (15, 17) ein hydropneumatischer Kolbenspeicher gebildet ist.

9. Hydromechanisches Abstützelement nach Anspruch 7 oder 8, **dadurch gekennzeichnet, dass** die Kolbenspeicher in jedem Teilzylinder (15, 17) durch Gleichbauteile, wie Dämpferkolben (19) und Deckelteil (27), gebildet sind.

10. Hydromechanisches Abstützelement nach einem der Ansprüche 6 bis 9, **dadurch gekennzeichnet, dass** die zwischen Dämpferkolben (19) und Trennwand (12) befindliche Ölseite (23) jedes Kolbenspeichers mit dem gleichen Druckraum (11) in Verbindung ist.

11. Hydromechanisches Abstützelement nach einem der Ansprüche 8 bis 10, **dadurch gekennzeichnet, dass** die Ölseiten (23) beider Kolbenspeicher durch eine Durchgangsbohrung (29) in der Trennwand (12) miteinander verbunden sind.

12. Hydromechanisches Abstützelement nach einem der Ansprüche 8 bis 11, **dadurch gekennzeichnet, dass** die Ölseiten (23) der Kolbenspeicher mit unterschiedlichen Druckräumen (10, 11) in Verbindung sind

13. Hydromechanisches Abstützelement nach Anspruch 10 oder 12, **dadurch gekennzeichnet, dass** die Verbindung zwischen jeweiligem Druckraum (10, 11) und Ölseite (23) des jeweils betreffenden Kolbenspeichers über vom jeweiligen Teilzylinder (15, 17) zum Kolbenumfang verlaufende Bohrungen (25, 31) gebildet ist, die im Bereich einer Kolbenfläche (7, 8) am Ringkörper (9) münden.
